# EUROPEAN PATENT SPECIFICATION

(11) **EP 0 910 448 B1**
(45) Date of publication and mention of the grant of the patent: **04.09.2002**
(21) Application number: 97923117.2
(22) Date of filing: 21.05.1997
(51) Int. Cl.: B01D 15/08

(54) **METHOD FOR FRACTIONATION OF A SOLUTION BY A CHROMATOGRAPHIC SIMULATED MOVING BED PROCESS**
VERFAHREN ZUR FRAKTIONIERUNG EINER LÖSUNG DURCH EIN SIMULIERTES WANDERBETT CHROMATOGRAPHIEVERFAHREN
METHODE PERMETTANT DE FRACTIONNER UNE SOLUTION AU MOYEN D'UN PROCEDE FAISANT APPEL A UN LIT CHROMATOGRAPHIQUE MOBILE SIMULE

(30) Priority: 24.05.1996 FI 962204
(43) Date of publication of application: 28.04.1999
(73) Proprietor: Danisco Finland OY, 02150 Espoo (FI)
(72) Inventor: HEIKKILÄ, Heikki, FIN-02320 Espoo (FI); HYÖKY, Göran, FIN-02460 Kantvik (FI); KUISMA, Jarmo, FIN-02320 Espoo (FI); PAANANEN, Hannu, FIN-02460 Kantvik (FI)
(74) Representative: HOFFMANN - EITLE
(86) International application number: FI9700306
(87) International publication number: WO97045185

(56) References cited:
- EP-A- 0 345 511
- EP-A- 0 663 224
- US-A- 2 985 589
- US-A- 4 412 866

## Description

The present invention relates to a method for fractionating a solution into two or more fractions enriched with different components. In particular, the invention relates to a method for fractionating a solution by a chromatographic simulated moving bed (SMB) process in which the liquid flow is effected in a system comprising one or more columns containing one or more partial packed beds. The dissolved substances present in the feedstock are separated in the partial packed beds, and a separation (i.e., dry solids) profile is formed. The columns/partial packed beds form one or more loops. The novel separation system comprises at least two separation profiles in the same loop.

A separation profile is formed by the feed solution and the dry substance recirculated. The separation profile is a complete or an essentially complete dry solids profile.

The novel chromatographic SMB method is capable of essentially improving the SMB separation capacity.

Fractionation of a solution comprising many dissolved substances into fractions enriched with different components is often necessary in order to recover the desired components optimally pure. The method of the invention can be employed to carry out such fractionation. A sulphite cooking liquor, for instance, can be fractionated by the method so as to give a fraction rich in monosaccharides and/or a fraction rich in lignosulphonates. Furthermore, molasses or vinasse can be fractionated in this way to obtain fractions rich in a sugar, such as sucrose, and/or betaine, for instance.

The method of the invention is particularly well suitable for separating substances that are difficult to separate from mixtures containing them. Such mixtures include fructose/glucose syrups, beet-derived juices, invert sugar mixtures, starch hydrolysates, wood hydrolysates, milk whey solutions and other lactose-containing solutions, solutions containing amino acids, fermentation broths containing various organic acids, such as citric acid, bagasse hydrolysates, and particularly solutions containing inositol, mannitol, sorbitol, xylitol, erythritol, glutamic acid and/or glycerol.

Continuously operated chromatographic separation processes presently commonly employ the simulated moving bed method, which is used in a variety of different applications. The simulated moving bed method may be sequential or continuous or comprise a combination of a continuous and a sequential method. In a continuous simulated moving bed process, all fluid streams typically flow continuously. The streams are: the supply of feed solution and eluent, the circulating of the liquid mixture, and the withdrawal of products. The flow rate for these flows may be adjusted in accordance with the separation goals (yield, purity, capacity). Normally 8 to 20 partial packed beds are combined into a loop. The eluent and feed supply and product withdrawal points are shifted cyclically in the downstream direction in the packing material bed. On account of the supply of eluent and feed solution, the withdrawal of products, and the flow through the packing material bed, a dry solids profile is formed in the packing material bed. Constituents having a lower migration rate in the packed bed are concentrated in the back slope of the separation profile, i.e. dry solids profile, while constituents having a higher migration rate are concentrated in the front slope. The points of introduction of the feed solution and eluent and the withdrawal points of the product or products are shifted cyclically at substantially the same rate at which the dry solids profile moves in the packing material bed. The eluent and feed supply and product withdrawal points are shifted cyclically by using feed and product valves located along the packing material bed, typically at the upstream and downstream end of each partial packed bed. If product fractions of very high purity are desired, short cycle times and multiple partial packed beds must be employed (the apparatus has the requisite valves and feed and withdrawal equipment).

In the sequential simulated moving bed process, some of the fluid streams do not flow continuously. The streams are: the supply of feed solution and eluent, the circulating of the liquid mixture, and the withdrawal of products (eluting phase; two to four or more products). The flow rate and the volumes of the different feeds and product fractions may be adjusted in accordance with the separation goals (yield, purity, capacity). The process commonly comprises three basic phases: feeding, elution and circulation. During the feeding phase, a feed solution, and possibly also an eluent during a simultaneous eluting phase, is introduced into predetermined partial packed beds, and simultaneously a product fraction or fractions are withdrawn. During the eluting phase, eluent is introduced into a predetermined partial packed bed or predetermined partial packed beds, and during these phases two, three or even four product fractions are withdrawn. During the circulating phase, no feed solution or eluent is supplied to the partial packed beds and no products are withdrawn.

The method of the invention may be either continuous or sequential, or a combination of a continuous and a sequential process.

The continuous simulated moving bed process has been disclosed in U. S. Patent 2 985 589 (Broughton et al.), for example. In accordance with this process, the mixture to be fractionated is introduced into one partial packed bed and eluent is introduced into another partial packed bed, and two product fractions are withdrawn substantially simultaneously. There are at least four partial packed beds, forming a single loop with continuous circulation, and the feed and product withdrawal points are shifted cyclically in the downstream direction in the packing material bed. A similar method is described in U. S. Patent 4 412 866 (Schoenrock et al.).

Sequential simulated moving bed processes are described in British application 2 240 053 and U. S. Patents 4 332 623 (Ando et al.), 4 379 751 (Yoritomi et al.) and 4 970 002 (Ando et al.), for instance. A sequential simulated moving bed process applied to the recovery of betaine and sucrose from beet molasses is described in the Applicants' Finnish Patent 86 416 (U. S. Patent 5 127 957). In these methods, only one complete or essentially complete dry solids profile is circulated in the partial packing material loop. Also the Applicants' copending Finnish applications 930 321 (filing date January 26, 1993) and 932 108 (filing date May 19, 1993) relate to a sequential simulated moving bed method, the first applied to the fractionation of molasses and the latter to the fractionation of sulphite cooking liquor. As is described in these applications, the simulated moving bed method may include multiple loops; yet a single dry solids profile is circulated in each loop.

Finnish Patent 86 416 (U. S. Patent 5 127 957) referred to above discloses a method for recovering betaine and sucrose from beet molasses employing a sequential simulated moving bed process. The chromatographic system comprises at least 3 chromatographic partial packed beds in series. In the method, betaine and sucrose are separated during the same sequence comprising a molasses feeding phase wherein the molasses feedstock is supplied to one of said partial packed beds and eluent water is supplied substantially simultaneously to another of said partial packed beds, an eluent feeding phase, and a circulating phase. These are repeated either once or several times during the sequence.

In the method disclosed in the above-stated Finnish application 930 321, the liquid flow is effected in a system comprising at least two partial packed beds, and the product or products are recovered during a multistep sequence. A sequence comprises feeding, eluting and circulating phases. During the circulating phase, the liquid present in the partial packed beds with its dry solids profile is circulated in two or more loops comprising one, two or more partial packed beds. A loop may be closed or "open", in other words, when liquid is circulated in one loop, eluent can be introduced into the other loop and a product fraction can be withdrawn therefrom. During the feed and elution, the flow through the packing material beds may take place between successive loops, wherein the flows carry material from one loop to another. During the circulating phase, the loop is closed and separated from the other loops. Only one dry solids profile is circulated in each loop.

The Applicants' Finnish application 941 866 discloses a simulated moving bed method for the continuous fractionation of solutions, employing ion exchange resins of two or more different ionic forms, so that the dry solids profile formed upon passage of the solution through a chromatographic packing material having a first ionic form is passed to a chromatographic packing material having a second ionic form without the partially separated components being remixed, and/or that the concentration and pumping stages of the solution, included in the prior art methods for fractionating solutions with packed beds of two different ionic forms, can be avoided.

U. S. Patent 5 198 120 (Masuda et al.) discloses a method for fractionating a ternary or multi-component solution by a simulated moving bed method comprising a series of several columns. A circulation shut-off valve is "in between" the column series. The solution to be fractionated is supplied to the column located immediately after the shut-off valve in the downstream direction, and simultaneously one or more product fractions are withdrawn from a column located upstream. During a combined eluting and circulating phase, the solution is circulated in a loop comprising the entire column series.

European application 663 224 (applicant Mitsubishi) discloses a method for fractionating a ternary or multi-component solution by a simulated moving bed method comprising a series of four columns. In this method, a loop may comprise two to four columns; yet only one dry solids profile is circulated in a loop.

The present invention relates to a method for fractionating a solution by a chromatographic simulated moving bed process in which the liquid flow is effected in a system comprising one or more columns containing one or more partial packed beds. The dissolved substances present in the feedstock are separated in the partial packed beds, and a separation (i.e., dry solids) profile is formed. The columns/partial packed beds form one or more loops. The novel method is characterized in that the separation system comprises at least two separation profiles in the same loop.

A separation profile is formed by the feed solution and the dry substance recirculated. The separation profile comprises all constituents present in the feedstock, i.e. constituents having a low migration rate, constituents having an intermediate migration rate, and constituents having a high migration rate. Accordingly, the separation profile is a complete or an essentially complete dry solids profile. Preferably, part of the constituent having the highest migration rate is withdrawn prior to the circulation phase.

The novel chromatographic SMB method is capable of essentially improving the SMB separation capacity. Compared with the earlier chromatographic SMB processes, for example, the novel SMB method has afforded a separation capacity improved by several dozen per cent for instance in molasses separation, while the product fraction performance characteristics have remained substantially the same.

The chromatographic apparatus employed comprises one column or several columns connected in series, fluid conduits connecting the columns, solution and eluent containers, feed and eluent conduits, recycle and feed pumps, heat exchangers, product fraction withdrawal conduits, and valves, flow and pressure regulators and on-line concentration, density, optical activity and conductivity meters. The process is proceeded with in a state of equilibrium, and the progress of the separation process is monitored with a density meter. The separation is controlled by a microprocessor, which controls the volume flow rates and volumes of feeds, employing quantity/volume measuring devices, temperature controllers, valves and pumps.

The number of columns is 1 to 20, preferably 2 to 8. Preferably, a column comprises one or several separate partial packed beds.

A strong acid ion exchange resin, such as Finex V09C (manufacturer Finex Oy), Finex V13C (manufacturer Finex Oy), Finex CS 11 GC (manufacturer Finex Oy) or Purolite PCR 651 (manufacturer Purolite Co) is preferably used as a column packing material.

The eluent employed is preferably water.

The flow rate may range from 0.5 to 15 m³/hr./m²; preferably the flow rate is 3 to 10 m³/hr./m².

### Example 1

### Two-profile separation from molasses

The column series employed for the separation comprised eight separate partial packed beds, four of which formed a column in each case, i.e. there were two columns. Product fractions were withdrawn from column 1 and column 2, residual fractions were withdrawn from columns 1 and 2, but a sucrose and betaine fraction were withdrawn from column 2 only, as were the recycle fractions.

The test conditions are shown in Table 1A.

**Table 1A**

| **Test conditions** | |
|---|---|
| Separation temperature | 85°C |
| Resin bed height | 14 m (7 m/column) |
| Column diameter | 11.1 cm |

A two-profile separation sequence was produced in the column series, wherein two separate separation profiles, i.e. essentially complete dry solids profiles, were simultaneously circulated in the separation process. The fractionation was performed in an eight-step sequence. The sequence had a cycle length of 38 minutes and comprised the following steps:
Step 1: 1.5 litres of feed solution was supplied to column 1 at a volumetric flow rate of 50 ℓ/hr., and a corresponding amount of a recycle fraction was eluted from column 2.
Step 2: 5.5 litres of feed solution (continuation of feeding phase) was supplied to column 1 at a volumetric flow rate of 50 ℓ/hr., and a corresponding amount of a sucrose fraction was eluted from column 2.
Step 3: 3.2 litres of eluent water was supplied to column 1 at a volumetric flow rate of 60 ℓ/hr., and a corresponding amount of the remaining part of sucrose fraction was withdrawn (from column 2).
Step 4: The supply of eluent water to column 1 was continued (3.3 litres; 60 ℓ/hr.), and a corresponding amount of a recycle fraction was eluted from column 2.
Step 5: The supply of eluent water to column 1 was continued (5.0 litres; 60 ℓ/hr.), and a corresponding amount of a betaine fraction was eluted from column 2.
Step 6: The supply of eluent water to column 1 was continued (13.0 litres; 68 ℓ/hr.), and a corresponding amount of a residual fraction was eluted from the same column. Simultaneously eluent water was also supplied to column 2 (10.0 litres; 73 ℓ/hr.), and a corresponding amount of the remaining part of betaine fraction was withdrawn from the same column.
Step 7: The supply of eluent water to column 2 was continued (2.5 litres; 73 ℓ/hr.), and a corresponding amount of a residual fraction was eluted from the same column.
Step 8: Circulation in the loop formed by columns 1 and 2 (6.0 litres; 75 ℓ/hr.).

The sequence containing these steps was repeated eight times to equilibrate the system, whereafter the method proceeded in a state of equilibrium. In the state of equilibrium, samples were collected during one sequence.

The composition of the raw material of the feed solution is shown in Table 1B.

**Table 1B**

| **Analysis of raw material** | | | | |
|---|---|---|---|---|
| Composition, % of dry solids | | | | |
| Trisaccharides | Sucrose | Monosaccharides | Betaine | Calcium |
| 2.8 | 57.6 | 0.6 | 7.6 | < 0.04 |
| | Dry solids content g/100 g | | | 52.7 |
| | pH | | | 9.4 |
| | Conductivity mS/cm | | | 13.7 |

The separation resin employed as a packing material was Finex V09C, which was initially regenerated with sodium chloride (during the fractionation it was equilibrated by cations from the molasses). The analysis of the separation resin is shown in Table 1C.

**Table 1C**

| **Analysis of separation resin** | |
|---|---|
| Make | Finex V09C |
| DVB % | 5.5 |
| Capacity equiv/ℓ | 1.56 |
| Mean bead size mm | 0.360 |

In equilibrium, the combined residual fraction had a dry solids content of 6.7 g/100 g, and the sucrose purity was 12.4% by weight. The sucrose fraction had a dry solids content of 19.1 g/100 g, and the sucrose purity was 90.1% by weigh. The betaine fraction had a dry solids content of 4.4 g/100 g, and the betaine purity was 43.1% by weight.

### Example 2

### Two-profile separation from vinasse

The column series employed for the separation comprised three separate separation columns. Residual fractions were withdrawn from all columns, and a betaine fraction was withdrawn from column 3 only.

The test conditions are shown in Table 2A.

**Table 2A**

| Test conditions | |
|---|---|
| Separation temperature | 80°C |
| Resin bed height | 10.5 m (3.5 m/column) |
| Column diameter | 20 cm |

A two-profile separation sequence was produced in the column series, wherein-two separate separation profiles, i.e. essentially complete dry solids profiles were simultaneously circulated in the separation process. The fractionation was performed in a 7-step sequence. The sequence had a cycle length of about 58 minutes and comprised the following steps:
Step 1: 7 litres of feed solution was supplied to column 1 at a volumetric flow rate of 150 ℓ/hr., and a corresponding amount of a residual fraction was eluted from column 2. Simultaneously 7 litres of eluent water was introduced into column 3 at a volumetric flow rate of 150 ℓ/hr., and a corresponding amount of a betaine fraction was eluted from the same column.
Step 2: 5 litres of feed solution (continuation of feeding phase) was supplied to column 1 at a volumetric flow rate 150 ℓ/hr., and a corresponding amount of a betaine fraction was eluted from column 3.
Step 3: 29 litres of feed solution was supplied to column 1, and a corresponding amount of residual fraction was eluted from the same column. Simultaneously 17 litres of eluent water was introduced into column 2 at a volumetric flow rate of 90 ℓ/hr., and a corresponding amount of the remaining part of betaine fraction was withdrawn from column 3.
Step 4: The supply of eluent water to column 2 was continued (6 litres; 80 ℓ/hr.) and a corresponding amount of residual fraction was eluted from column 1.
Step 5: Circulation in the loop formed by columns 1-3 (10 litres; 100 ℓ/hr.).
Step 6: Eluent water was introduced into column 1 (33 litres; 100 ℓ/hr.), and a corresponding amount of a residual fraction was eluted from column 3.
Step 7: Eluent water was introduced into column 3 (28 litres;-150 ℓ/hr.), and a corresponding amount of a residual fraction was eluted from column 2.

A sequence comprising these steps was repeated eight times to equilibrate the system, whereafter the method proceeded in a state of equilibrium. In the state of equilibrium, samples were collected during one sequence.

The composition of the raw material of the feed solution is shown in Table 2B.

**Table 2B**

| **Analysis of raw material** | |
|---|---|
| Composition, % of dry solids | |
| Betaine | 13.8 |
| Dry solids content g/100 g | 53.8 |
| pH | 7.1 |
| Conductivity mS/cm | 46.5 |

The separation resin employed as a packing material was Finex V13C, which was initially regenerated with sodium chloride (during the fractionation it was equilibrated by cations from the vinasse). The analysis of the separation resin is shown in Table 2C.

**Table 2C**

| **Analysis of separation resin** | |
|---|---|
| Make | Finex V13C |
| DVB % | 8.0 |
| Capacity equiv/ℓ | 1.8 |
| Mean bead size mm | 0.34 |

In equilibrium, the betaine fraction had a dry solids content of 22.4%, and the betaine purity was 48.3% by weight. The combined residual fraction had a dry solids content of 18.4%, and the betaine purity was 2.3% by weight.

### Example 3

### Two-profile separation from glucose/fructose mixture

The column series employed for the separation comprised four separate separation columns. Product fractions were withdrawn from all columns.

The test conditions are shown in Table 3A.

**Table 3A**

| **Test conditions** | |
|---|---|
| Separation temperature | 65°C |
| Resin bed height | 11.2 m (2.8 m/column) |
| Column diameter | 20 cm |

A two-profile separation sequence was produced in the column series, wherein two separate separation profiles, i.e. essentially complete dry solids profiles were simultaneously circulated in the separation process. The fractionation was performed in a four-step sequence. The sequence had a cycle- length of 74 minutes and comprised the following steps:
Step 1: 18 litres of a feed solution was supplied to columns 1 and 3 at a volumetric flow rate of 120 ℓ/hr., and a corresponding amount of a glucose fraction was eluted from the same columns.
Step 2: 8 litres of eluent water was supplied to columns 2 and 4 at a volumetric flow rate of 120 ℓ/hr., and a corresponding amount of a glucose fraction was eluted from columns 3 and 1.
Step 3: 30 litres of eluent water was supplied to columns 2 and 4, and a corresponding amount of a fructose fraction was eluted from the same columns.
Step 4: Circulation in the loop formed by columns 1-4 (106 litres; 130 ℓ/hr.).

The sequence containing these steps was repeated eight times to equilibrate the system, whereafter the method proceeded in a state of equilibrium. In the state of equilibrium, samples were collected during one sequence.

The composition of the raw material of the feed solution is shown in Table 3B.

**Table 3B**

| **Analysis of raw material** | | | |
|---|---|---|---|
| Composition, % of dry solids | | | |
| Glucose | 49.2 | Fructose | 49.5 |
| Dry solids content g/100 g | | | 50 |

The separation resin employed as a packing material was Finex CS 11 GC, which was regenerated with calcium chloride. The analysis of the separation resin is shown in Table 3C.

**Table 3C**

| **Analysis of separation resin** | |
|---|---|
| Make | Finex CS 11 GC |
| DVB % | 5.5 |
| Capacity equiv/ℓ | 1.5 |
| Mean bead size mm | 0.310 |

In equilibrium, the combined glucose fraction had a dry solids content of 23.3 g/100 g, and the glucose purity was 96.7% by weight. The combined fructose fraction had a dry solids content of 20.3 g/100 g, and the fructose purity was 99.7%.

### Example 4

### Three-profile separation from molasses

The column series employed for the separation comprised three separate separation columns. Residual fractions were withdrawn from all columns, and sucrose, recycle and betaine fractions were withdrawn from column 1.

The test conditions are shown in Table 4A.

**Table 4A**

| **Test conditions** | |
|---|---|
| Separation temperature | 80°C |
| Resin bed height | 15.3 m (5.1 m/column) |
| Column diameter | 20 cm |

A three-profile separation sequence was produced in the column series, wherein three separate separation profiles, i.e. essentially complete dry solids profiles were simultaneously circulated in the separation process. The fractionation was performed in an eight-step sequence. The sequence had a cycle length of 43 minutes and, comprised the following steps:
Step 1: 9 litres of a feed solution was supplied to column 2 at a volumetric flow rate of 110 ℓ/hr., and a corresponding amount of a recycle fraction was withdrawn from column 1.
Step 2: 11 litres of a feed solution (continuation of feeding phase) was supplied to column 2 at a volumetric flow rate of 110 ℓ/hr., and a corresponding amount of a sucrose fraction was eluted from column 1.
Step 3: 16 litres of eluent water was supplied to column 2 at a volumetric flow rate of 110 ℓ/hr., and a corresponding amount of sucrose fraction was eluted from column 1.
Step 4: 5.5 litres of eluent water was supplied to column 2 at a volumetric flow rate of 110 ℓ/hr., and a corresponding amount of a recycle fraction was withdrawn from column 1.
Step 5: The supply of eluent water to column 2 was continued (9 litres; 110 ℓ/hr.), and a corresponding amount of a betaine fraction was eluted from column 1.
Step 6: Eluent water was introduced into columns 1, 2 and 3 (5 litres into each at a volumetric flow rate of 120 ℓ/hr.); a corresponding amount of a betaine fraction was eluted from column 1 and a corresponding amount of residual fractions was eluted from columns 2 and 3.
Step 7: The supply of eluent water to columns 1, 2 and 3 was continued (15 litres at 100 ℓ/hr. to column 1, 21 litres at 140 ℓ/hr. to column 2, 21 litres at 140 ℓ/hr. to column 3), and a corresponding amount of residual fractions was eluted from columns 1, 2 and 3.
Step 8: Circulation in the loop formed by columns 1-3 (4 litres; 120 ℓ/hr.).

The sequence containing these steps was repeated eight times to equilibrate the system, whereafter the method proceeded in a state of equilibrium. In the state of equilibrium, samples were collected during one sequence.

The composition of the raw material of the feed solution is shown in Table 4B.

**Table 4B**

| **Analysis of raw material** | | | | |
|---|---|---|---|---|
| Composition, % of raw material | | | | |
| Tri-saccharides | Sucrose | Betaine | Calcium | |
| 3.9 | 60.4 | 5.1 | < 0.04 | |
| | Dry solids content g/100 g | | | 58.5 |
| | Solids | | | < 0.1 vol. % |
| | pH | | | 9.0 |
| | Conductivity mS/cm | | | 23.1 |

The separation resin employed as a packing material was Finex V09C, which was initially regenerated with sodium chloride (during the fractionation it was equilibrated by cations from the molasses). The analysis of the separation resin is shown in Table 4C.

**Table 4C**

| **Analysis of separation resin** | |
|---|---|
| Make | Finex V09C |
| DVB % | 5.5 |
| Capacity equiv/ℓ | 1.5 |
| Mean bead size mm | 0.310 |

In equilibrium, the combined sucrose fraction had a dry solids content of 22 g/100 ml, and the sucrose purity was 92.7% by weight. The combined betaine fraction had a dry solids content of 5.2 g/100 ml, and the betaine purity was 36.6% by weight. The combined residual fraction had a dry solids content of 8.2 g/100 ml.

### Example 5

### Two-profile continuous separation from molasses

The column used for the separation comprised 14 separate partial packed beds between which a liquid pervious but resin-retaining exchange plate was provided; a feeding and withdrawal apparatus was disposed on top of the exchange plate. The column had a diameter of 0.2 m, and the bed had a height of 14 m (1 m per partial packed bed). The step length was 310 s, which for the feed was divided into two parts, i.e. feeding 280 s and rinsing of the pipe system and the feed and withdrawal apparatus 30 s. The cycle length was 4 340 s.

The separation resin employed as a packing material was Purolite PCR 651, which was initially regenerated with sodium chloride (during the fractionation it was equilibrated by cations from the molasses). The analysis of the separation resin is shown in Table 5A.

**Table 5A**

| **Analysis of separation resin** | |
|---|---|
| Make | Purolite PCR 651 |
| DVB % | 5.5 |
| Capacity equiv/ℓ | 1.5 |
| Mean bead size mm | 0.340 |

The composition of the raw material of the feed solution is shown in Table 5B.

**Table 5B**

| **Analysis of raw material** | | |
|---|---|---|
| Composition, % of dry solids | | |
| Sucrose | 59 | |
| Dry solids content g/100 g | | 59 |
| pH | | 9.2 |
| Conductivity mS/cm | | 13.8 |

The sequence comprised 14 steps. The situation during one step was the following:

Sucrose fractions were withdrawn from partial packed beds 2 and 9, and residual fractions were withdrawn from partial packed beds 6 and 13.

Feed solution and rinsing solution were introduced into partial packed beds 5 and 12, and eluent water was introduced into partial packed beds 1 and 8.

Partial packed beds 1 and 2 (and 8-and 9 respectively) of the column formed a sucrose elution zone where the volumetric flow rate was 214 ℓ/hr. The sucrose fraction was withdrawn at a volumetric flow rate of 19.6 ℓ/hr.

Partial packed beds 3 and 4 (and 10 and 11 respectively) formed an extraction zone where the volumetric flow rate was 194 ℓ/hr. Partial packed beds 5 and 6 (and 12 and 13 respectively) formed an ion exclusion zone where the volumetric flow rate was 206 ℓ/hr. The feed solution was introduced between these zones (volumetric flow rate 12.5 ℓ/hr.), as was the rinsing solution (volumetric flow rate 12.5 ℓ/hr.).

Partial packed bed 7 (and 14 respectively) formed a transition zone where the volumetric flow rate was 140 ℓ/hr.

The residual fraction was withdrawn from between the ion exclusion zone and the transition zone (volumetric flow rate 66 ℓ/hr.).

The feed and withdrawal points were shifted cyclically at intervals of 310 seconds for one partial packed bed in the flow direction (correspondingly, the elution, extraction, ion exclusion and transition zones were shifted for one partial packed bed).

In equilibrium, the sucrose fraction had a dry solids content of 27.1% and a sucrose purity of 87.8%. The residual fraction had a dry solids content of 5.5% and a sucrose purity of 16.4%.

### Example 6

### Two-profile separation from xylitol run-off

The column series employed for the separation comprised three columns. Product fractions were withdrawn from column 1 and residual fractions from columns 1, 2 and 3.

The test conditions are shown in Table 6A.

**Table 6A**

| **Test conditions** | |
|---|---|
| Separation temperature | 70°C |
| Resin bed height | 11.4 m (3.8 m/column) |
| Column diameter | 20 cm |
| Number of columns | 3 |

A two-profile separation sequence was produced in the column series, wherein two separate separation profiles, i.e. essentially complete dry solids profiles, were simultaneously circulated in the separation process. The fractionation was performed in an eight-step sequence. The sequence had a cycle length of 87 minutes and comprised the following steps:
Step 1: 15.0 litres of feed solution was supplied to the top of column 1 at a volumetric flow rate of 52 ℓ/hr., and a corresponding amount of a residual fraction was eluted from column 2. Simultaneously eluent water was supplied to column 3 (15.0 litres; 160 ℓ/hr.) and a corresponding amount of the xylitol fraction from the second profile was withdrawn from the same column.
Seep 2: 10.0 litres of feed solution (continuation of feeding phase) was supplied to column 1 at a volumetric flow rate of 125 ℓ/hr., and a corresponding amount of a xylitol fraction was eluted from column 3.
Step 3: Circulation in the loop formed by columns 1 to 3 (15.0 litres; 125 ℓ/hr.).
Step 4: Eluent water was supplied to column 2 (15.0 litres; 125 ℓ/hr.), and a corresponding amount of a residual fraction was eluted from column 1.
Step 5: The supply of eluent water to column 2 was continued (40.0 litres; 140 ℓ/hr.), and a corresponding amount of a residual fraction was eluted from column 3. Simultaneously eluent water was supplied to column 1 (15.0 litres; 55 ℓ/hr.) and a corresponding amount of a residual fraction was eluted from the same column.
Step 6: The supply of eluent water to column 1 was continued (15.0 litres; 125 ℓ/hr.), and a corresponding amount of a residual fraction was eluted from column 3.
Step 7: Circulation in the loop formed by columns 1 to 3 (18.0 litres; 125 ℓ/hr.).
Step 8: Eluent water was supplied to column 3 (20.0 litres; 125 ℓ/hr.), and a corresponding -amount of a residual fraction was eluted from column 2.

The sequence containing these steps was repeated eight times to equilibrate the system, whereafter the method proceeded in a state of equilibrium. In the state of equilibrium, samples were collected during one sequence.

The composition of the raw material of the feed solution is shown in Table 6B. Before the separation, the raw material was filtered and the concentration of the feed solution was adjusted to 50 g/100 g.

**Table 6B**

| **Analysis of raw material** | | | | | |
|---|---|---|---|---|---|
| Composition, % of dry solids | | | | | |
| Glycerol | Mannitol | Rhamnitol | Xylitol | Sorbitol | Others |
| 2.5 | 18.2 | 1.1 | 43.0 | 7.8 | 28.5 |
| | Dry solids content g/100 g | | | 50.6 | |
| | pH | | | 5.2 | |
| | Conductivity mS/cm | | | 0.3 | |

The separation resin employed as a packing material was Finex CS 13 GC (a polystyrene matrix cross-linked with divinylbenzene; manufacturer Finex Oy, Finland), which was initially regenerated with calcium chloride (during the fractionation it was equilibrated by cations from the run-off). The analysis of the separation resin is shown in Table 6C

**Table 6C**

| **Analysis of separation resin** | |
|---|---|
| Make | Finex CS 13 GC |
| DVB % | 6.5 |
| Capacity equiv/ℓ | 1.65 |
| Mean bead size mm | 0.41 |

In equilibrium, the combined residual fraction had a dry solids content of 7.7 g/100 g, and the xylitol concentration was 19.1% by weight. The xylitol fraction had a dry solids content of 16.5 g/100 g, and the xylitol purity was 66.2% by weight and the xylitol yield 80.6% by weight.

## Claims

1. A method for fractionating a solution into two or more fractions by a chromatographic simulated moving bed (SMB) process,
**characterized in that** the separation system comprises at least two separation profiles in the same loop.

2. A method according to claim 1, wherein the simulated moving bed (SMB) process is a sequential simulated moving bed process.

3. A method according to claim 1, wherein the simulated moving bed (SMB) process is a continuous simulated moving bed process.

4. A method as claimed in any one of the preceding claims, **characterized in that** part of the constituent having the highest migration rate is withdrawn prior to the circulation phase.

5. A method as claimed in any one of the preceding claims, **characterized in that** the columns form one or more loops.

6. A method as claimed in any one of the preceding claims, **characterized in that** the column comprises/columns comprise several partial packed beds.

7. A method as claimed in any one of the preceding claims, **characterized in that** the packing material is a strongly acid ion exchange resin.

8. A method as claimed in any one of the preceding claims, **characterized in that** the number of columns is 1-20, preferably 2-8.

9. A method as claimed in any one of the preceding claims, **characterized in that** the eluent is water.

10. A method as claimed in any one of the preceding claims, **characterized in that** the flow rate is 0.5-15 m³/hr./m², preferably 3-10 m³/hr./m².

11. A method as claimed in any one of the preceding claims, **characterized in that** the raw material is selected from a group consisting of molasses, vinasse, fructose/glucose syrups, beet-derived juices, invert sugar mixtures, starch hydrolysates, wood hydrolysates, milk whey solutions and other lactose-containing solutions, solutions containing amino acids, fermentation broths containing various organic acids, such as citric acid, bagasse hydrolysates, and particularly solutions containing inositol, mannitol, sorbitol, xylitol, erythritol, glutamic acid and/or glycerol.

12. A method as claimed in any one of the preceding claims, **characterized in that** the raw material is vinasse.

13. A method as claimed in any one of claims 1 to 11 **characterized in that** the raw material is molasses.

14. A method as claimed in any one of claims 1 to 11 **characterized in that** the raw material is sulphite cooking liquor.

15. A method as claimed in any one of the preceding claims, **characterized in that** the product(s) is/are selected from a group consisting of glucose, fruc tose, sucrose, betaine, inositol, mannitol, glycerol, xylitol, xylose, sorbitol, erythritol, organic acids, particularly amino acids, such as glutamic acid.

## Patentansprüche

1. Verfahren zum Fraktionieren einer Lösung in zwei oder mehr Fraktionen durch ein chromatographisches Simulated-Moving-Bed (SMB)-Verfahren, **dadurch gekennzeichnet, dass** das Trennungssystem mindestens zwei Trennungsprofile im gleichen Zyklus umfasst.

2. Verfahren gemäß Anspruch 1, wobei das Simulated-Moving-Bed (SMB)-Verfahren ein sequentielles Simulated-Moving-Bed (SMB)-Verfahren ist.

3. Verfahren gemäß Anspruch 1, wobei das Simulated-Moving-Bed (SMB)-Verfahren ein kontinuierliches Simulated-Moving-Bed (SMB)-Verfahren ist.

4. Verfahren wie in einem der vorhergehenden Ansprüche beansprucht, **dadurch gekennzeichnet, dass** ein Teil des Bestandteils mit der höchsten Migrationsrate vor der Umlaufphase abgenommen wird.

5. Verfahren wie in einem der vorhergehenden Ansprüche beansprucht, **dadurch gekennzeichnet, dass** die Säule eine oder mehrere Schlaufen bildet.

6. Verfahren wie in einem der vorhergehenden Ansprüche beansprucht, **dadurch gekennzeichnet, dass** die Säule/Säulen mehrere teilweise gepackte Betten umfasst/umfassen.

7. Verfahren wie in einem der vorhergehenden Ansprüche beansprucht, **dadurch gekennzeichnet, dass** das Packmaterial ein stark saures Ionenaustauschharz ist.

8. Verfahren wie in einem der vorhergehenden Ansprüche beansprucht, **dadurch gekennzeichnet, dass** die Anzahl der Säulen 1-20, bevorzugt 2-8 beträgt.

9. Verfahren wie in einem der vorhergehenden Ansprüche beansprucht, **dadurch gekennzeichnet, dass** das Elutionsmittel Wasser ist.

10. Verfahren wie in einem der vorhergehenden Ansprüche beansprucht, **dadurch gekennzeichnet, dass** die Fließrate 0,5-15 m³/hr./m², bevorzugt 3-10 m³/hr./m² beträgt.

11. Verfahren wie in einem der vorhergehenden Ansprüche beansprucht, **dadurch gekennzeichnet, dass** das Rohmaterial aus der Gruppe ausgewählt wird, die aus Melasse, Vinasse, Fruktose/Glukosesirupen, aus Rüben stammenden Säften, Invertierzuckermischungen, Stärkehydrolysaten, Holzhydrolysaten, Milchmolkelösungen und anderen Laktose enthaltenden Lösungen, Lösungen, die Aminosäuren enthalten, Fermentierbrühen, die zahlreiche organische Säuren, wie beispielsweise Zitronensäure, Bagassehydrolysate enthalten, und insbesondere Lösungen, die Inositol, Mannitol, Sorbitol, Xylitol, Erythritol, Glutaminsäure und/oder Glycerol enthalten, besteht.

12. Verfahren wie in einem der vorhergehenden Ansprüche beansprucht, **dadurch gekennzeichnet, dass** das Rohmaterial Vinasse ist.

13. Verfahren wie in einem der Ansprüche 1-11 beansprucht, **dadurch gekennzeichnet, dass** das Rohmaterial Melasse ist.

14. Verfahren wie in einem der Ansprüche 1-11 beansprucht, **dadurch gekennzeichnet, dass** das Rohmaterial Sulphit-Kochflüssigkeit ist.

15. Verfahren wie in einem der vorhergehenden Ansprüche beansprucht, **dadurch gekennzeichnet, dass** das Produkt/die Produkte aus der Gruppe ausgewählt ist/sind, die aus Glucose, Fructose, Succrose, Betain, Inositol, Mannitol, Glycerol, Xylitol, Xylose, Sorbitol, Erythritol, organischen Säuren, insbesondere Aminosäuren, wie beispielsweise Glutaminsäure, besteht.

## Revendications

1. Méthode pour fractionner une solution en deux ou plusieurs fractions par un procédé faisant appel à un lit mobile simulé (SMB) chromatographique, **caractérisée en ce que** le système de séparation comprend au moins deux profils de séparation dans la même boucle.

2. Méthode selon la revendication 1, dans laquelle le procédé faisant appel à un lit mobile simulé (SMB) est un procédé séquentiel faisant appel à un lit mobile simulé.

3. Méthode selon la revendication 1, dans laquelle le procédé faisant appel à un lit mobile simulé (SMB) est un procédé continu faisant appel à un lit mobile simulé.

4. Méthode selon l'une quelconque des revendications précédentes, **caractérisée en ce qu'**une partie du composant ayant la vitesse de migration la plus élevée est retirée avant la phase de circulation.

5. Méthode selon l'une quelconque des revendications précédentes, **caractérisée en ce que** les colonnes forment une ou plusieurs boucles.

6. Méthode selon l'une quelconque des revendications précédentes, **caractérisée en ce que** la/les colonne(s) comprend/comprennent plusieurs lits à remplissage partiel.

7. Méthode selon l'une quelconque des revendications précédentes, **caractérisée en ce que** le matériau de remplissage est une résine échangeuse d'ions fortement acide.

8. Méthode selon l'une quelconque des revendications précédentes, **caractérisée en ce que** le nombre de colonnes est de 1 à 20, de préférence de 2 à 8.

9. Méthode selon l'une quelconque des revendications précédentes, **caractérisée en ce que** l'éluant est de l'eau.

10. Méthode selon l'une quelconque des revendications précédentes, **caractérisée en ce que** le débit est de 0,5 à 15 m³/h/m², de préférence de 3 à 10 m³/h/m².

11. Méthode selon l'une quelconque des revendications précédentes, **caractérisée en ce que** la matière première est choisie dans le groupe consistant en la mélasse, la vinasse, les sirops de fructose/glucose, les jus dérivés de la betterave, les mélanges de sucres invertis, les hydrolysats d'amidon, les hydrolysats de bois, les solutions à base de petit-lait et autres solutions contenant du lactose, les solutions contenant des acides aminés, les milieux de fermentation contenant divers acides organiques, comme l'acide citrique, les hydrolysats de bagasse, et en particulier les solutions contenant de l'inositol, du mannitol, du sorbitol, du xylitol, de l'érythritol, de l'acide glutamique et/ou du glycérol.

12. Méthode selon l'une quelconque des revendications précédentes, **caractérisée en ce que** la matière première est la vinasse.

13. Méthode selon l'une quelconque des revendications 1 à 11, **caractérisée en ce que** la matière première est la mélasse.

14. Méthode selon l'une quelconque des revendications 1 à 11, **caractérisée en ce que** la matière première est une liqueur de cuisson à base de sulfite.

15. Méthode selon l'une quelconque des revendications précédentes, **caractérisée en ce que** le/les produit(s) est/sont choisis dans un groupe consistant en le glucose, le fructose, le saccharose, la bétaïne, l'inositol, le mannitol, le glycérol, le xylitol, la xylose, le sorbitol, l'érythritol, les acides organiques, en particulier les acides aminés, comme l'acide glutamique.
